# EUROPEAN PATENT SPECIFICATION

(11) **EP 2 933 122 B1**
(45) Date of publication and mention of the grant of the patent: **25.04.2018**
(21) Application number: 13870964.7
(22) Date of filing: 12.12.2013
(51) Int. Cl.: B60C 19/08, B60C 11/00

(54) **PNEUMATIC TIRE**
LUFTREIFEN
PNEUMATIQUE

(30) Priority: 09.01.2013 JP 2013002054
(43) Date of publication of application: 21.10.2015
(73) Proprietor: Sumitomo Rubber Industries, Ltd., Kobe-shi, Hyogo 651-0072 (JP)
(72) Inventor: HIROSUE Eisuke, Kobe-shi Hyogo 651-0072 (JP)
(74) Representative: Manitz Finsterwald Patentanwälte PartmbB
(86) International application number: PCT/JP2013/083349
(87) International publication number: WO 2014/109169

(56) References cited:
- EP-A1- 2 567 833
- DE-A1-102010 017 443
- DE-A1-102010 017 444
- DE-A1-102010 037 711
- JP-A- H0 878 139
- JP-A- H01 293 208
- JP-A- 2004 268 863
- JP-A- 2007 176 437
- JP-A- 2011 525 453

## Description

### [Technical Field]

The present invention relates to a pneumatic tire that may have a low electrical resistance.

### [Background Art]

Recent years, there has been a tendency that a tread rubber and a sidewall rubber of pneumatic tires are filled with a lot of silica. Silica brings about advantages of not only low rolling resistance of the tires but also improved wet grip. On the other hand, since silica has low conductivity, it brings increase of electrical resistance of the tires. The tires having a large electrical resistance may accumulate static electricity in a vehicle, thereby often causing electromagnetic interference such as radio noise. The document relating to the invention is as follows.
A pneumatic tire according to the preamble of claim 1 is disclosed in DE 10 2010 017 443 A1 and in DE 10 2010 017 444 A1.

### [Related Art Documents]

### [Patent Documents]

[Patent Document 1] Japanese Unexamined Patent Application Publication No. H09-071112

### [Summary of the Invention]

### [Problem to be Solved by the Invention]

The present invention has been worked in light of the circumstance described above, and it is a main object thereof to provide a pneumatic tire having a low electrical resistance by providing a conductive yarn extending between a pair of bead cores.

### [Solution to Problem]

The present invention provides for a pneumatic tire including a tread portion, a pair of sidewall portions, a pair of bead portions each connected to an inner end of each sidewall portion and having a bead core therein, a toroidal carcass extending between the pair of bead cores, the carcass comprising a carcass ply comprising parallelly arranged carcass cords covered with a toping rubber, and a conductive yarn extending between the pair of bead cores along the topping rubber of the carcass ply.

In the pneumatic tire in accordance with the present invention, a plurality of conductive yarns may be arranged separately at intervals in a circumferential direction of the tire.

In the pneumatic tire in accordance with the present invention, the intervals are preferably in a range of from 80 to 120 mm.

In the pneumatic tire in accordance with the present invention, the conductive yarn is preferably arranged outwardly of the carcass ply between the bead cores.

In the pneumatic tire in accordance with the present invention, the conductive yarn preferably comprises a carbon fiber.

In the pneumatic tire in accordance with the present invention, the carbon fiber preferably has a fineness in a range of from 70 to 170 denier.

In the pneumatic tire in accordance with the present invention, the tread portion is provided with a belt layer comprising parallelly arranged steel cords and arranged radially outwardly of the carcass, and a tread rubber including a rubber that has a volume resistivity value in a range of less than 10⁸ Ω·cm and is electrically communicated with the belt layer, and the conductive yarn is arranged in contact with the belt layer.

In the pneumatic tire in accordance with the present invention, the conductive yarn may extend in parallel to a radial direction of the tire.

In the pneumatic tire in accordance with the present invention, the conductive yarn may extend in a zigzag manner in a radial direction of the tire.

### [Advantageous Effects of Invention]

The pneumatic tire in accordance with the present invention includes the troidal carcass extending between the pair of bead cores. The carcass includes the carcass ply comprising parallelly arranged carcass cords covered with a toping rubber. Furthermore, the pneumatic tire in accordance with the present invention includes an conductive yarn extending between the pair of bead cores along the topping rubber of the carcass ply.

Such a pneumatic tire may have a low electrical resistance. Thus it is prevented to accumulate static electricity into a vehicle. Furthermore, since the conductive yarn extends between the pair of bead cores, it may provide a continuous and wide electrical conductive path extending from the tread portion to both sidewall portions. Thus the static electricity generated in the vehicle may be released to the ground through a rim by a simple configuration that a conductive rubber is arranged on the bead portion and the tread portion, for example.

### [Brief Description of Drawings]

FIG. 1 is a cross sectional view of a pneumatic tire in accordance with the present embodiment.
FIG. 2a is a side perspective view of the tire having conductive yarns extending in a straight manner, and FIG. 2b is a side perspective view of the tire having conductive yarns extending in a zigzag manner.
FIG. 3a is an enlarged perspective view of a carcass ply with conductive yarns extending in a straight manner, and FIG. 3b is an enlarged perspective view of a carcass ply with conductive yarns extending in a zigzag manner.
FIG. 4 is a cross sectional view taken along a line A-A of FIG. 1.
FIG. 5 is a cross sectional view of a pneumatic tire in accordance with another embodiment of the present invention.
FIG. 6 is a cross sectional view of a pneumatic tire in accordance with another embodiment of the present invention.
FIG. 7 is a cross sectional view of a device for measuring electrical resistance of a tire.

### [Description of Embodiments]

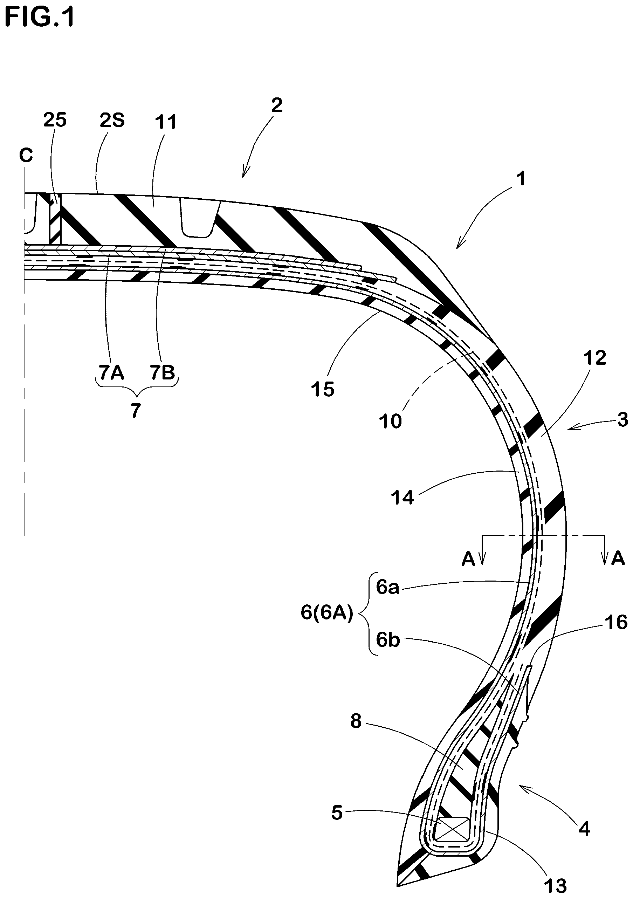

An embodiment of the present invention will be explained below with reference to the accompanying drawings. FIG. 1 illustrates a meridian cross-section, which includes a tire rotational axis, of a pneumatic tire 1 in accordance with the present embodiment 1 (hereinafter it may be referred as "tire") under a standard state. Here, the standard state is such that the tire is the tire is mounted on a standard wheel rim (not shown) with a standard pressure and is loaded with no tire load. Various dimensions, positions and the like of the tire refer to those under the standard condition of the tire unless otherwise noted.

The standard wheel rim is a wheel rim officially approved for the tire by standards organizations, wherein the standard wheel rim is the "standard rim" specified in JATMA, the "Design Rim" in TRA, and the "Measuring Rim" in ETRTO, for example.

The standard pressure is the air pressure for the tire specified by the same organization, wherein the standard pressure is the "maximum air pressure" in JATMA, the maximum pressure given in the "Tire Load Limits at Various Cold Inflation Pressures" table in TRA, and the "Inflation Pressure" in ETRTO, for example.

As shown in FIG. 1, the pneumatic tire 1 in accordance with the present embodiment includes a tread portion 2, a pair of sidewall portions 3, and a pair of bead portions 4 each with a bead core 5 therein and each connected to a radially inner end of each sidewall portion 3. The pneumatic tire 1 in accordance with the present embodiment is provided with a toroidal carcass 6 extending between the pair of bead cores 5, and a belt layer 7 disposed radially outwardly of the carcass 6 in the tread portion 2. In this embodiment, a pneumatic tire for passenger cars is illustrated.

The carcass 6 includes, at least one, a single carcass ply 6A in this embodiment. The carcass ply 6A includes parallelly arranged carcass cords covered with a toping rubber. The carcass ply 6A includes a main portion 6a extending from the tread portion 2 to the bead core 5 of the bead portions 4 through the sidewall portions 3, and a turn-up portions 6b each turned up around the bead core 5 from axially inside to outside of the tire. A bead apex rubber 8 which is made of a hard rubber and extends radially outwardly from the bead core 5 is disposed between the main portion 6a and the turn-up portion 6b. With this, the bead portion 4 is suitably reinforced.

For the carcass cords, organic fiber cords such as aramid, rayon and the like may be used. The carcass cords, for example, are arranged at an angle of from 70 to 90 degrees with respect to the tire equator C.

The topping rubber of the carcass ply 6A contains carbon black as reinforcing agent for rubber same as conventional tires. Thus the carcass ply 6A has a volume specific electrical resistance value in a range of less than 10⁸ Ω•cm, more preferably less than 10⁷ Ω•cm, thereby having sufficient conductivity. In this description, rubber having conductivity means rubber having a volume specific electrical resistance value of less than 10⁸ Ω•cm. In this description, rubber having non-conductivity means rubber having a volume specific electrical resistance value of not less than 10⁸ Ω•cm.

The belt layer 7 includes at least one belt ply of belt cords arranged at an angle of from 10 to 40 degrees with respect to the tire equator C. In this embodiment, the belt layer 7 includes radially inner and outer belt plies 7A and 7B which are overlapped one another so that each belt cords of plies crosses. Each of the belt plies 7A and 7B is formed of belt cords covered with a topping rubber. Preferably, the topping rubber for the belt layer is used the same one as the topping rubber of the carcass ply 6A.

According to the invention, a steel cord is used for the belt cords.

The pneumatic tire 1 in accordance with the present embodiment includes a tread rubber 11 arranged radially outward of the belt layer 7, a sidewall rubber 12 arranged axially outward of the carcass 6 in each sidewall portion 3, a clinch rubber 13 for preventing deviation against the rim arranged axially outward of the bead portion 4, and an inner liner rubber 14 with air impermeable property forming a cavity surface 15 of the tire.

As for the tread rubber 11 and the sidewall rubber 12, a rubber composition containing a lot of silica for reinforcing rubber may be used same as the traditional tire. These rubber has a volume specific electrical resistance value in a range of from 10⁸ to 10⁹ Ω•cm, for example.

As for the clinch rubber 13 and the inner liner rubber 14, a rubber composition containing a lot of carbon black for reinforcing rubber may be used. These rubber has a volume specific electrical resistance value in a range of from 106 to 10⁷ Ω•cm, for example.

The pneumatic tire 1 in accordance with the present embodiment is provided with an conductive yarn 10 extending between the bead cores along the topping rubber of the carcass ply 6A. Preferably, the conductive yarns 10 are arranged in a troidal manner. The conductive yarn 10 has a small electrical resistance value. Correspondingly, the pneumatic tire 1 also has a small electrical resistance, thereby preventing accumulation of the static electricity into the vehicle. Furthermore, since the conductive yarn 10 extends between the pair of bead cores 5, it may provide a long electrically conductive path continuing from the tread portion 2 to both sidewall portions 3. Accordingly, the static electricity generated in the vehicle may be released to the ground through a rim by a simple configuration that a conductive rubber is arranged on the bead portion 4 and the tread portion 2, for example.

The conductive yarn 10 is disposed in radially outside the main portion 6a of the carcass ply 6A. The conductive yarn 10 extends from the tread portion 2 through the sidewall portions 3 to the bead portions 4, wherein the yarn 10 further extends to the radially outermost edge 16 of the turn-up portion 6b along the turn-up portion 6b passing through below the bead core 5. This configuration where the conductive yarn 10 is turned up around the bead portions 4 may effectively lower the electrical resistance of the bead portion 4.

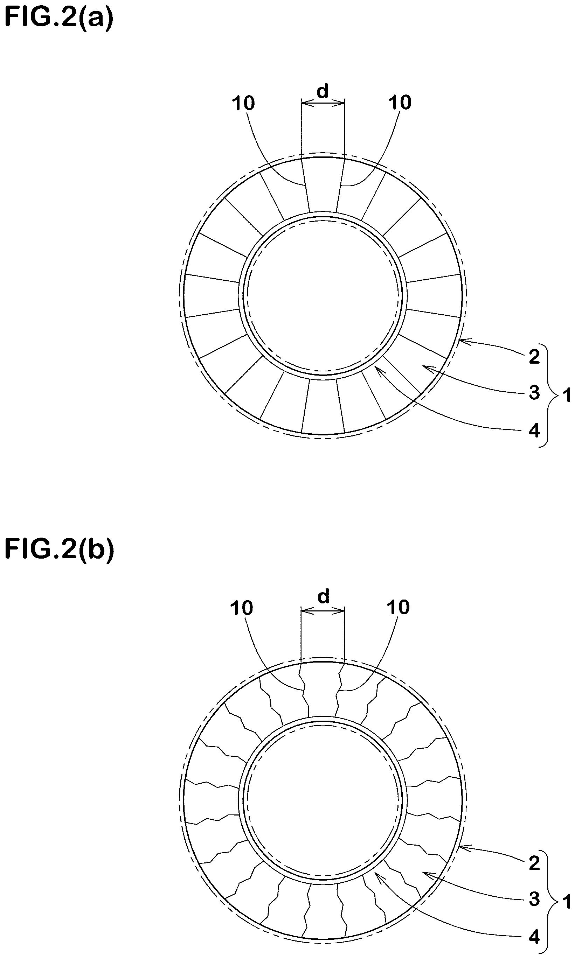

FIGS. 2a and 2b each illustrates a side perspective view of the tire 1. Preferably, a plurality of conductive yarns 10 are arranged separately at intervals in a circumferential direction of the tire, as shown in FIG. 2a. The conductive yarns 10 in accordance with the embodiment shown in FIG. 2a extend in parallel to a radial direction of the tire in a straight manner. Preferably, the conductive yarns 10 are arranged at equal intervals in the circumferential direction of the tire. The conductive yarns 10 may lower the electrical resistance of the tire 1 uniformly, and may provide an electrical conductive path in a large range continuing from the tread portion 2 to the sidewall portion 3.

As shown in FIG. 2b, the conductive yarns 10 may extend in a zigzag or wavy manner with respect to the radial direction of the tire. Such a conductive yarn 10 may be longer than the one shown in FIG. 2a, thereby effectively preventing accumulation of static electricity in a vehicle.

The intervals d between adjacent conductive yarns in the circumferential direction of the tire 1 are preferably not less than 80 mm, more preferably not less than 90 mm, but preferably not more than 120 mm, more preferably not more than 110 mm. Each of the intervals d means an interval at the position where the interval between adjacent conductive yarns 10 is the maximum, wherein the position is at the tire equator C in this embodiment. When the interval d is small, productivity of the tire tends to lower. When the interval d is large, it may be difficult to lower the electrical resistance of the tire.

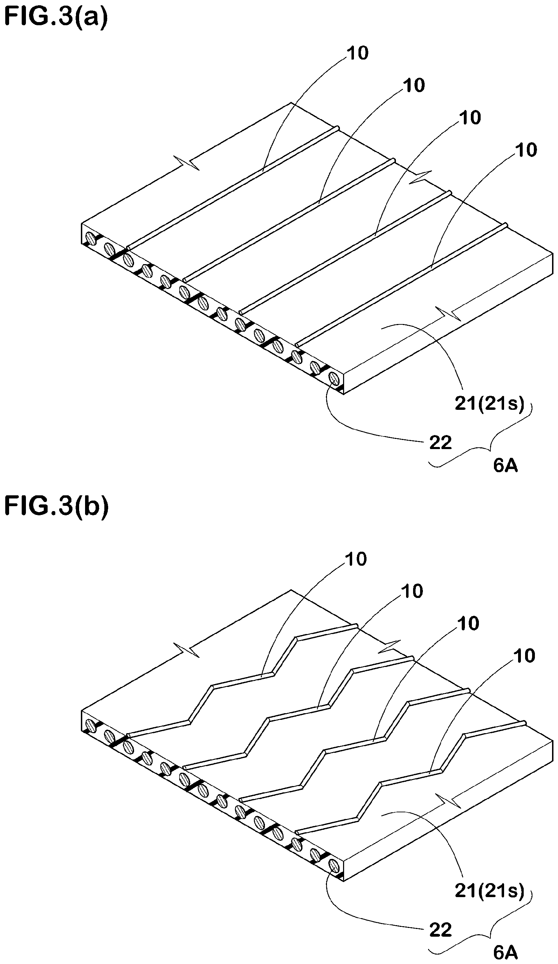

FIGS. 3a and 3b each illustrates an enlarged perspective view of the carcass ply 6A with conductive yarns 10. As shown in FIGS. 3a and 3b, the conductive yarns 10 are preferably arranged on the outer surface 21s of the topping rubber 21 along with the longitudinal direction of the carcass cords 22.

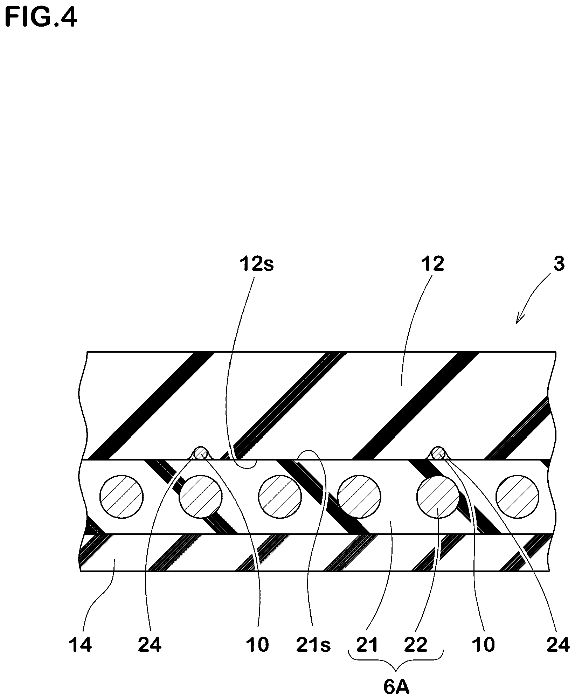

FIG. 4 illustrates a cross sectional view taken along a line A-A of FIG. 1. As shown in FIG. 4, the conductive yarn 10 offers very small gap 24 extending along the yarn 10 between the sidewall rubber 12 and the carcass ply 6A. Such small gap 24 may suppress air remaining failure by discharging the air remaining between the outer surface 21s of the topping rubber 21 and the inner surface 12s of the sidewall rubber 12 outside along the yarn 10.

As used herein, the conductive yarn 10 refers to the yarn having a volume specific electrical resistance value in a range of not more than 10⁶ Ω•cm. The volume specific electrical resistance value of the conductive yarn 10 is preferably not more than 10⁵ Ω•cm, more preferably, not more than 10⁴ Ω•cm, thereby efficiently lowering the electrical resistance of the tire.

For the conductive yarn 10, carbon fiber is preferably employed, for example. The carbon fiber has not only excellent conductivity but also high durability against repeated deformation of the tire.

The conductive yarn preferably has a fineness in a range of not less than 70 denier, more preferably not less than 75 denier, but preferably not more than 170 denier, more preferably not more than 110 denier. When the conductive yarn 10 is excessively small, the yarn may be cut off due to strain during tire traveling. On the other hand, when the conductive yarn 10 has excessively large fineness, a dent and/or bulge may be appeared on the sidewall portion 3 due to the conductive yarn 10, thereby lowering appearance of the tire.

In order to discharge the static electricity accumulated in a vehicle to the ground through the tire efficiently, the tread rubber 11 shown in FIG. 1 includes a rubber composition that has a volume specific electrical resistance value in a range of less than 10⁸ Ω•cm and that is electrically communicated with the belt layer 7. The tread rubber 11 may electrically communicated with the conductive yarn through the belt layer 7 and the topping rubber of the carcass ply 6A, thereby further lowering the electrical resistance of the tire.

In order to reduce the rolling resistance of the tire, the tread rubber 11 may include a silica rich rubber composition. In this case, the tread rubber 11 tends to have high electrical resistance. In order to discharge the static electricity accumulated in the vehicle to the ground, the tread portion 2 may include a terminal portion 25 that electrically connects the ground with the belt layer 7. The terminal portion 25 is made of a conductive rubber that includes one end exposed at the tread ground contacting surface 2s and the other end connected to the belt layer 7. The terminal portion 25 is an accessorial rubber portion formed as a columnar shape or a circumferentially extending rib shape. Such a tread portion 2 may offer a low rolling resistance while discharging the static electricity accumulated in the vehicle.

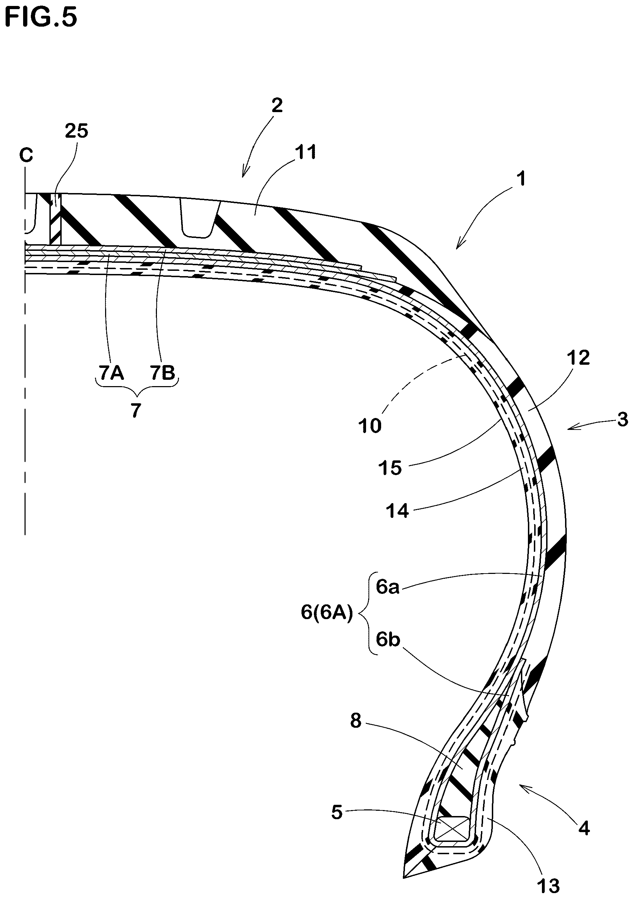

As shown in FIG. 5, the conductive yarn 10 may be arranged on the side of the cavity surface 15 of the main portion 6a of the carcass ply 6A. In this embodiment, since the conductive yarn 10 may electrically communicated with the conductive clinch rubber 13 in the bead portion 4, the tire may efficiently discharge the static electricity accumulated in the vehicle to the ground. The conductive yarn 10 as mentioned above does not produce neither a dent nor bulge on the outer surface of the sidewall portion 3, even under a condition where a large number of yarns with a large fineness are provided, thereby providing excellent appearance of the tire.

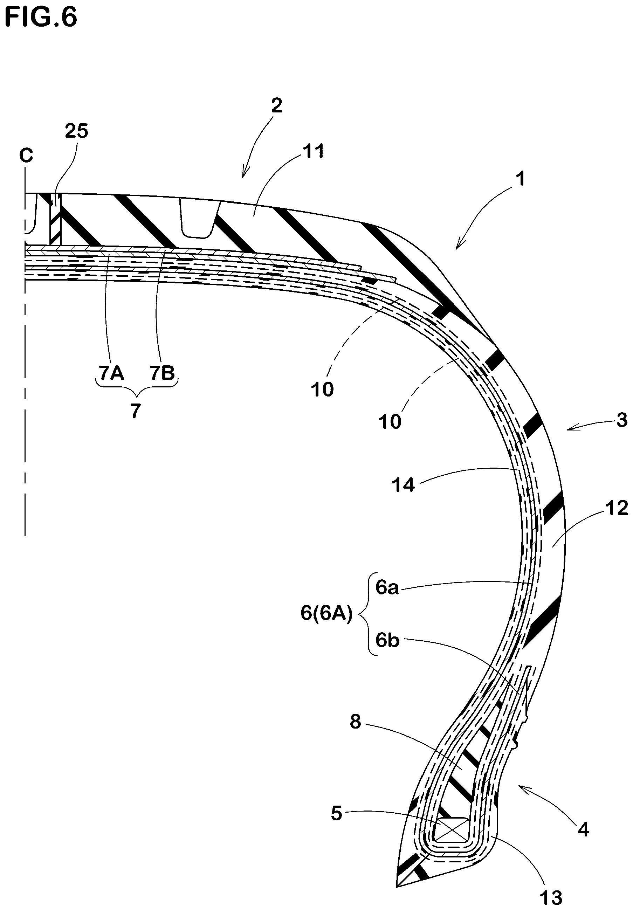

As shown in FIG. 6, the conductive yarn 10 may be arranged on radially both sides of the main portion 6a. This configuration may provide wider conductive path region so that the static electricity in the vehicle is efficiently discharge to the ground.

While the particularly preferable embodiments of the pneumatic tire in accordance with the present invention have been described in detail, the present invention is not limited to the illustrated embodiments, but can be modified and carried out in various aspects.

### [Example]

Pneumatic tires for passenger cars having a size of 195/65R15 and the basic structure shown in FIGS. 1, 5 and 6 were manufactured based on the specifications of Table 1 and then tested for electrical resistance of the tire, appearance of the sidewall portion, and productivity. As for Ref. 1, the tire which is not provided with the conductive yarn was also tested in the same manner. Test methods are as follows.

### Electrical resistance value of tire:

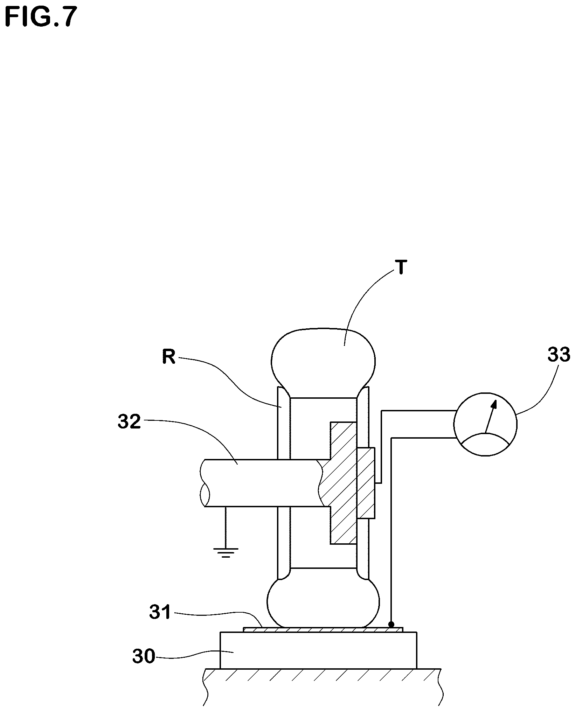

As shown in FIG. 7, the electric resistance value of the assembly of each test tire T and the rim R was measured according to the procedure specified by JATMA using a measurement device. The measurement device includes an insulating plate 30 with electrical resistance value greater than 10¹² Ω, a polished metal plate 31 with electrical resistance value less than 10 Ω arranged on the insulating plate 30, a conductive mounting axle 32 for supporting the tire and rim assembly, and a ohm meter 33. Each test tire T was cleaned up to remove a mold release agent, dust and the like from the tire surface, and completely dried. Measurement conditions are as follows.
Rim material: Aluminum alloy
Rim size: 17x7J
Internal pressure: 200 kPa
Tire load: 5.3 kN
Testing environment temperature (temperature of testing room): 25 degrees C.
Humidity: 50%
Measurement range of ohm meter: 1.0x10³ to 1.6×10¹⁶ Ω
Testing voltage (applied voltage): 1000 V

The test procedure are as follows:
(1) The test tire was mounted on a wheel rim to prepare the tire and rim assembly, using a small amount of soapy water between them as the lubricant.
(2) The tire and rim assembly was left in a test room for two hours and then attached to the conductive mounting axle 32.
(3) The tire and rim assembly was loaded with the mentioned tire load for 30 seconds and then released. Again the tire load was applied for 30 seconds and released. Lastly, the tire load was applied for 2 minutes and released.
(4) After five minutes from applying the testing voltage to the tire and rim assembly, the electric resistance value between the axle 32 and the metal plate 31 was measured with the ohm meter 33. Such measurement was repeated totally four times per tire by rotating the tire at 90 degree steps. The highest measurement value in the four measurements was defined as the electrical resistance value of the tire.

### Sidewall appearance:

An observer checked the sidewall portions of the tire with naked eyes whether a dent caused by the conductive yarn exist, and evaluated according to the following three levels.
Level A: Excellent (without dent)
Level B: Available for commercial use (with dent)
level C: Unusable for commercial use (with dent)

### Productivity test:

For each test tire productivity was evaluated according to the following three levels.
Level A: Excellent (substantially same as conventional tire productivity)
Level B: Available for commercial use (it is worse than conventional tire productivity)
Level C: Incapable of mass-production (it is worse than conventional tire productivity)

**[Table 1]**

| | Ref. 1 | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 |
|---|---|---|---|---|---|---|---|---|---|---|---|---|---|---|
| Electrically conductive yarn configuration | - | FIG. 1 | FIG. 1 | FIG. 1 | FIG. 1 | FIG. 1 | FIG. 1 | FIG. 1 | FIG. 5 | FIG. 5 | FIG. 5 | FIG. 6 | FIG. 6 | FIG. 6 |
| Electrically conductive yarn fineness (denier) | - | 70 | 70 | 85 | 85 | 85 | 85 | 170 | 70 | 85 | 170 | 70 | 85 | 170 |
| Intervals d of electrically conductive yarns (mm) | - | 100 | 50 | 80 | 100 | 120 | 150 | 100 | 80 | 80 | 80 | 120 | 80 | 80 |
| Electrical resistance value of tire (x10⁶ Ω) | 10.0 | 3.0 | 0.6 | 0.1 | 0:5 | 1.0 | 6.0 | 0.1 | 0.2 | 0.1 | 0.1 | 0.09 | 0.08 | 0.07 |
| Sidewall appearance | A | A | A | A | A | A | A | B | A | A | A | A | B | B |
| Productivity | A | A | B | A | A | A | A | B | A | A | A | B | B | B |

As shown in Table 1, it was confirmed that the tire of Ex.1 had a low electrical resistance as compared with the reference tire.

### [Description of the reference numerals]

- 2: Tread portion

- 3: Sidewall portion
- 4: Bead portion
- 5: Bead core
- 6: Carcass
- 10: Electric conductive yarn

## Claims

1. A pneumatic tire (1) comprising:
a tread portion (2);
a pair of sidewall portions (3);
a pair of bead portions (4) each connected to an inner end of each sidewall portion (3) and having a bead core (5) therein;
a toroidal carcass (6) extending between the pair of bead cores (5), the carcass (6) comprising a carcass ply (6A) comprising parallelly arranged carcass cords covered with a toping rubber; and
a conductive yarn (10) extending between the pair of bead cores (5) along the topping rubber of the carcass ply (6A),
**characterized in that** the tread portion (2) is provided with a belt layer (7) comprising parallelly arranged steel cords arranged radially outwardly of the carcass (6), and a tread rubber (11) including a rubber that has a volume resistivity value in a range of less than 10⁸ Ω•cm and is electrically communicated with the belt layer (7), and
the conductive yarn (10) is arranged in contact with the belt layer (7).

2. The pneumatic tire according to claim 1,
wherein a plurality of conductive yarns are arranged separately at intervals in a circumferential direction of the tire.

3. The pneumatic tire (1) according to claim 1 or 2,
wherein a plurality of conductive yarns are arranged separately at intervals in a circumferential direction of the tire, and
the intervals (d) are in a range of from 80 to 120 mm.

4. The pneumatic tire (1) according to any one of claims 1 to 3,
wherein the conductive yarn (10) is arranged outwardly of the carcass ply (6A) between the bead cores (5).

5. The pneumatic tire (1) according to any one of claims 1 to 4,
wherein the conductive yarn (10) comprises a carbon fiber.

6. The pneumatic tire (1) according to claim 5,
wherein the carbon fiber has a fineness in a range of from 70 to 170 denier.

7. The pneumatic tire (1) according to any one of claims 1 to 6,
wherein the conductive yarn (10) extends in parallel to a radial direction of the tire (1).

8. The pneumatic tire (1) according to any one of claims 1 to 6,
wherein the conductive yarn (10) extends in a zigzag manner in a radial direction of the tire (1).

## Patentansprüche

1. Luftreifen (1), umfassend:
einen Laufflächenabschnitt (2);
ein Paar Seitenwandabschnitte (3);
ein Paar Wulstabschnitte (4), die jeweils mit einem inneren Ende jedes Seitenwandabschnitts (3) verbunden sind und einen Wulstkern (5) darin aufweisen;
eine torusförmige Karkasse (6), die sich zwischen dem Paar Wulstkernen (5) erstreckt, wobei die Karkasse (6) eine Karkasslage (6A) mit parallel angeordneten Karkasskorden, die mit Gummierungskautschuk bedeckt sind, umfasst; und
ein leitfähiges Garn (10), das sich zwischen dem Paar Wulstkernen (5) entlang des Gummierungskautschuks der Karkasslage (6A) erstreckt,
**dadurch gekennzeichnet, dass** der Laufflächenabschnitt (2) mit einer Gürtelschicht (7), die parallel angeordnete Stahlkorde umfasst, die radial außen von der Karkasse (6) angeordnet sind, und einem Laufflächenkautschuk (11) versehen ist, der einen Kautschuk umfasst, der einen Volumenwiderstandswert in einem Bereich von weniger als 10⁸ Ohm•10 cm aufweist und elektrisch mit der Gürtelschicht (7) in Verbindung steht, und
das leitfähige Garn (10) in Kontakt mit der Gürtelschicht (7) angeordnet ist.

2. Luftreifen (1) nach Anspruch 1, wobei die Mehrzahl von leitfähigen Garnen getrennt in Intervallen in einer Umfangsrichtung des Reifens angeordnet ist.

3. Luftreifen (1) nach Anspruch 1 oder 2, wobei die Mehrzahl von leitfähigen Garnen getrennt in Intervallen in einer Umfangsrichtung des Reifens angeordnet ist, und die Intervalle (d) in einem Bereich von 80 bis 120 mm liegen.

4. Luftreifen (1) nach einem der Ansprüche 1 bis 3, wobei das leitfähige Garn (10) außen von der Karkasslage (6A) zwischen den Wulstkernen (5) angeordnet ist.

5. Luftreifen (1) nach einem der Ansprüche 1 bis 4, wobei das leitfähige Garn (10) eine Kohlefaser umfasst.

6. Luftreifen (1) nach Anspruch 5, wobei die Kohlefaser eine Feinheit in einem Bereich von 70 bis 170 Denier aufweist.

7. Luftreifen (1) nach einem der Ansprüche 1 bis 6, wobei das leitfähige Garn (10) sich parallel zu einer radialen Richtung des Reifens (1) erstreckt.

8. Luftreifen (1) nach einem der Ansprüche 1 bis 6, wobei das leitfähige Garn (10) sich zickzackweise in einer radialen Richtung des Reifens (1) erstreckt.

## Revendications

1. Bandage pneumatique (1) comprenant :
une portion formant bande de roulement (2) ;
une paire de portions formant parois latérales (3) ;
une paire de portions de talons (4) chacune connectée à une extrémité intérieure de chaque portion formant paroi latérale (3) et ayant une âme de talon (5) à l'intérieur ;
une carcasse toroïdale (6) s'étendant entre la paire d'âmes de talons (5), la carcasse (6) comprenant une nappe de carcasse (6A) comprenant des câblés de carcasse agencés en parallèle et couverts avec un caoutchouc d'enrobage ; et
un filament conducteur (10) s'étendant entre la paire d'âmes de talons (5) le long du caoutchouc d'enrobage de la nappe de carcasse (6A),
**caractérisé en ce que** la portion formant bande de roulement (2) est pourvue d'une couche de ceinture (7) comprenant des câblés d'acier agencés en parallèle, agencés radialement à l'extérieur de la carcasse (6), et un caoutchouc de roulement (11) incluant un caoutchouc qui présente une valeur de résistivité en volume dans une plage de moins de 10⁸ Ω•cm et en communication électrique avec la couche de ceinture (7), et
le filament conducteur (10) est agencé en contact avec la couche de ceinture (7).

2. Bandage pneumatique selon la revendication 1,
dans lequel une pluralité de filaments conducteurs sont agencés séparément à intervalles dans une direction circonférentielle du pneumatique.

3. Bandage pneumatique (1) selon la revendication 1 ou 2,
dans lequel une pluralité de filaments conducteurs sont agencés séparément à intervalles dans une direction circonférentielle du pneumatique, et
les intervalles (d) sont dans une plage de 80 à 120 mm.

4. Bandage pneumatique (1) selon l'une quelconque des revendications 1 à 3,
dans lequel le filament conducteur (10) est agencé à l'extérieur de la nappe de carcasse (6A) entre les âmes de talons (5).

5. Bandage pneumatique (1) selon l'une quelconque des revendications 1 à 4,
dans lequel le filament conducteur (10) comprend une fibre de carbone.

6. Bandage pneumatique (1) selon la revendication 5,
dans lequel la fibre de carbone a une finesse dans une plage de 70 à 170 deniers.

7. Bandage pneumatique (1) selon l'une quelconque des revendications 1 à 6,
dans lequel le filament conducteur (10) s'étend en parallèle à une direction radiale du pneumatique (1).

8. Bandage pneumatique (1) selon l'une quelconque des revendications 1 à 6,
dans lequel le filament conducteur (10) s'étend dans une manière en zigzag dans une direction radiale du pneumatique (1).
